# EUROPÄISCHE PATENTANMELDUNG

(11) **EP 3 231 654 A1**
(43) Veröffentlichungstag der Anmeldung: **18.10.2017**
(21) Anmeldenummer: 17160599.1
(22) Anmeldetag: 13.03.2017
(51) Int. Cl.: B60K 11/06, B60K 17/22

(54) **KÜHLVORRICHTUNG FÜR EIN KRAFTFAHRZEUG**

(30) Priorität: 13.04.2016 DE 102016004536
(71) Anmelder: MAN Truck & Bus AG, 80995 München (DE)
(72) Erfinder: Ertelt, Christoph, 81543 München (DE); König, Christopher, 94209 Regen (DE)
(74) Vertreter: v. Bezold & Partner Patentanwälte - PartG mbB

(57) **Zusammenfassung**

Die Erfindung betrifft eine Kühlvorrichtung für ein Kraftfahrzeug, insbesondere für ein Nutzfahrzeug, und insbesondere eine Kühlvorrichtung für eine Antriebsstrangkomponente eines Kraftfahrzeugs. Dabei umfasst die Kühlvorrichtung ein Lüfterrad (2), das koaxial zu einer Antriebswelle (1) des Kraftfahrzeugs angeordnet ist und in Antriebsverbindung mit der Antriebswelle (1) steht.

## Beschreibung

Die Erfindung betrifft eine Kühlvorrichtung für ein Kraftfahrzeug, insbesondere für ein Nutzfahrzeug. Die Erfindung betrifft insbesondere eine Kühlvorrichtung für eine Antriebsstrangkomponente eines Kraftfahrzeugs.

In Nutzfahrzeugen und besonders bei schweren Nutzfahrzeugen, Lastkraftwagen und Bussen treten hohe Temperaturen im Bereich von Motor und Antriebsstrang auf. Dies kann auch dazu führen, dass bei mangelnder Kühlung weitere Bauteile unzulässig stark erwärmt werden können.

Aus dem Stand der Technik, siehe beispielsweise die Offenlegungsschriften DE 43 19 281 A1, EP 0 888 957 A2, EP 2 193 984 A1, sind Ansätze zur konvektiven Kühlung einer Antriebsstrangkomponente bekannt, bei denen Belüftungsbleche, Unterbodenverkleidungsteile oder vergleichbare Umlenkelemente im Bereich des Antriebsstrangs vorgesehen sind, die eine Unterbodenluftströmung zu einer Antriebsstrangkomponente hin umlenkt. Nachteilig hieran ist, dass mit diesen Ansätzen oftmals keine zufriedenstellende Kühlleistung, insbesondere bei schweren Nutzfahrzeugen, erreicht werden kann.

Es ist somit eine Aufgabe der Erfindung, einen verbesserten Ansatz bereitzustellen, mit dem Nachteile herkömmlicher Techniken vermieden werden können. Die Aufgabe der Erfindung ist es insbesondere, eine Kühlvorrichtung für ein Kraftfahrzeug, insbesondere für ein Nutzfahrzeug, bereitzustellen, mittels derer auch insbesondere bei schweren Nutzfahrzeugen eine hohe Kühlleistung im Bereich des Motors und/oder des Antriebsstrangs erzeugt werden kann.

Diese Aufgaben werden durch eine Kühlvorrichtung mit den Merkmalen des unabhängigen Anspruchs gelöst. Vorteilhafte Ausführungsformen und Anwendungen der Erfindung sind Gegenstand der abhängigen Ansprüche und werden in der folgenden Beschreibung unter teilweiser Bezugnahme auf die Figuren näher erläutert.

Gemäß allgemeinen Gesichtspunkten der Erfindung wird eine Kühlvorrichtung für ein Kraftfahrzeug, insbesondere für ein Nutzfahrzeug, bereitgestellt. Es wird insbesondere eine derartige Kühlvorrichtung zur Kühlung von mindestens einer Komponente im Bereich des Antriebsstrangs bereitgestellt. Die Kühlvorrichtung umfasst ein Lüfterrad, das koaxial zu einer Antriebswelle des Kraftfahrzeugs angeordnet ist und in Antriebsverbindung mit der Antriebswelle steht. Die Antriebswelle kann insbesondere eine Gelenkwelle, beispielsweise eine Kardan-Gelenkwelle sein.

Das Vorsehen eines Lüfters, der auf der Antriebswelle sitzt und von dieser angetrieben wird, ermöglicht eine effiziente Kühlmöglichkeit von Komponenten im Bereich des Antriebsstrangs, ohne dass ein separater Antriebsmechanismus vonnöten ist. Ferner kann dieser Ansatz mit den bekannten Ansätzen, die auf einer reinen Umlenkung von Unterbodenluftströmungen basieren, kombiniert werden.

Das Lüfterrad umfasst vorzugsweise eine Nabe zur koaxialen Anordnung des Lüfterrads zur Antriebswelle und von der Nabe ausgehende Lüfterblätter, die auch als Flügel oder Schaufeln bezeichnet werden. Das Lüfterrad kann ferner einen die Lüfterblätter an ihren nabenfernen Enden umschließenden, mit dem Lüfterrad umlaufenden Lüftermantel aufweisen. Mit anderen Worten können die Lüfterblätter des Lüfterrades an ihrer äußeren Spitze, d. h. an ihrem radialen Ende, von einem geschlossenen Ring eingefasst werden. Derartige Lüfter werden auch als Mantellüfter bezeichnet. Dies ermöglicht eine effektivere Kühlung, da die radiale Luftausströmung vermindert wird.

Selbstverständlich besteht auch die Möglichkeit, dass die Lüfterblätter des Lüfterrades an ihrer äußeren Spitze, d. h. an ihrem radialen Ende, frei sind, d. h. nicht von einem geschlossenen Ring eingefasst sind.

Gemäß einer Ausführungsform der Lüftervorrichtung können das Lüfterrad und die Antriebswelle in ihrer Drehzahl gekoppelt sein. Antriebswelle und Lüfterrad drehen sich somit immer mit der gleichen Drehzahl.

Gemäß einer Ausführungsform der Lüftervorrichtung kann das Lüfterrad über eine Kupplung, vorzugsweise eine Visco-Kupplung, in Antriebsverbindung mit der Antriebswelle stehen. Gemäß dieser Ausführungsform sind das Lüfterrad und die Antriebswelle nicht in starrer Antriebsverbindung sondern können sich mit unterschiedlicher Drehzahl drehen.

Gemäß einer Ausführungsform der Lüftervorrichtung kann das Lüfterrad über eine Fliehkraftkupplung, in Antriebsverbindung mit der Antriebswelle stehen. Gemäß dieser Ausführungsform sind das Lüfterrad und die Antriebswelle lediglich in einem vorgegebenen Drehzahlbereich in ihrer Drehzahl gekoppelt. Die Kupplung kann ausgebildet sein, die Drehzahlkopplung zwischen Antriebswelle und Lüfterrad zu unterbrechen, derart, dass, falls die Drehzahl der Antriebswelle einen vorbestimmten Grenzwert überschreitet, das Lüfterrad und die Antriebswelle sich mit unterschiedlichen Drehzahlen drehen oder die Antriebsverbindung zwischen Antriebswelle und Lüfterrad unterbrochen wird. Auf diese Weise können beispielsweise Drehzahlspitzen gekappt werden. Die Fliehkraftkupplung ist vorzugsweise eine mechanische Fliehkraftkupplung.

Eine weitere Möglichkeit der erfindungsgemäßen Realisierung sieht vor, dass das Lüfterrad mehrteilig ausgeführt ist. Insbesondere kann die Nabe des Lüfterrads mehrteilig ausgeführt sein. Beispielsweise kann das Lüfterrad aus mindestens zwei Teillüfterrädern gebildet sein, die jeweils eine Teilnabe aufweisen. Ein besonderer Vorzug dieser Ausführungsvariante liegt in der einfachen Montage des Lüfterrads. So können die Teillüfterräder im nichtverbundenen Zustand an der Montagestelle um die Antriebswelle herum angeordnet werden und dann miteinander und/oder direkt auf der Antriebswelle, z. B. in Form einer Gelenkwelle, befestigt werden. Die Teillüfterräder können jeweils durch Befestigungsmittel aneinander und/oder an der Antriebswelle befestigt sein.

Die Antriebswelle dient der Kraftübertragung zwischen dem Getriebe und dem angetriebenen Rad bzw. Achse und steht somit an einem axialen Ende mit dem Getriebe in Wirkverbindung und an dem gegenüberliegenden axialen Ende mit einer Achse, insbesondere einem Differentialgehäuse bzw. Achskörper einer angetriebenen Achse, in Wirkverbindung.

Die Antriebswelle kann in an sich bekannter Weise rohrförmig ausgeführt sein und einen achsseitig angeordneten ersten Abschnitt mit einem ersten Durchmesser und einen getriebeseitig angeordneten zweiten Abschnitt mit einem zweiten Durchmesser aufweisen. Eine derartige Antriebswelle kann insbesondere einen Längenausgleich aufweisen.

Gemäß einer ersten Variante kann der zweite Durchmesser kleiner als der erste Durchmesser sein, wobei zwischen dem ersten Abschnitt und dem zweiten Abschnitt ein Übergangsabschnitt angeordnet ist, in welchem der Durchmesser von dem größeren ersten Durchmesser auf den kleineren zweiten Durchmesser abnimmt. Gemäß einer zweiten Variante kann der zweite Durchmesser größer als der erste Durchmesser sein, wobei zwischen dem ersten Abschnitt und dem zweiten Abschnitt ein Übergangsabschnitt angeordnet ist, in welchem der Durchmesser von dem kleineren ersten Durchmesser auf den größeren zweiten Durchmesser zunimmt.

Gemäß einer weiteren Ausführungsform der Erfindung kann das Lüfterrad an dem achsseitig angeordneten ersten Abschnitt angeordnet sein. Das Lüfterrad kann jedoch auch an dem getriebeseitig angeordneten zweiten Abschnitt angeordnet sein. Je nach Ausführungsvariante der Antriebswelle kann der achsseitig angeordnete Abschnitt derjenige mit kleinerem oder mit größerem Durchmesser im Vergleich zum getriebeseitig angeordneten Abschnitt sein.

Die Erfindung betrifft ferner ein Kraftfahrzeug, insbesondere ein Nutzfahrzeug, aufweisend eine Kühlvorrichtung, wie in diesem Dokument beschrieben.

Die zuvor beschriebenen bevorzugten Ausführungsformen und Merkmale der Erfindung sind beliebig miteinander kombinierbar. Weitere Einzelheiten und Vorteile der Erfindung werden im Folgenden unter Bezug auf die beigefügten Zeichnungen beschrieben. Es zeigen:
- Figur 1: eine perspektivische Ansicht einer Kühlvorrichtung gemäß einer ersten Ausführungsform der Erfindung;
- Figur 2: eine perspektivische Ansicht einer Kühlvorrichtung gemäß einer zweiten Ausführungsform der Erfindung;
- Figur 3: eine perspektivische Ansicht einer Kühlvorrichtung gemäß einer dritten Ausführungsform der Erfindung;
- Figur 4: eine perspektivische Ansicht einer Kühlvorrichtung gemäß einer vierten Ausführungsform der Erfindung;
- Figur 5: eine Seitenansicht im Teilschnitt gemäß der vierten Ausführungsform der Erfindung;
- Figur 6: eine weitere perspektivische Ansicht einer Kühlvorrichtung gemäß der dritten Ausführungsform der Erfindung.

Gleiche oder funktional äquivalente Elemente sind in allen Figuren mit denselben Bezugszeichen bezeichnet.

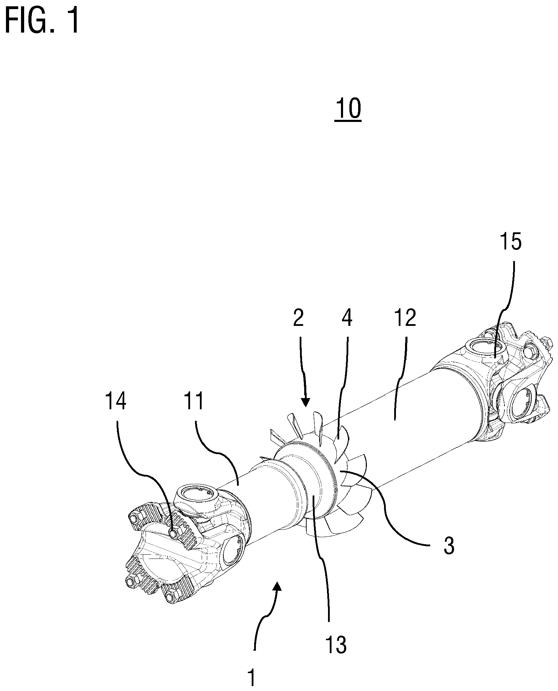

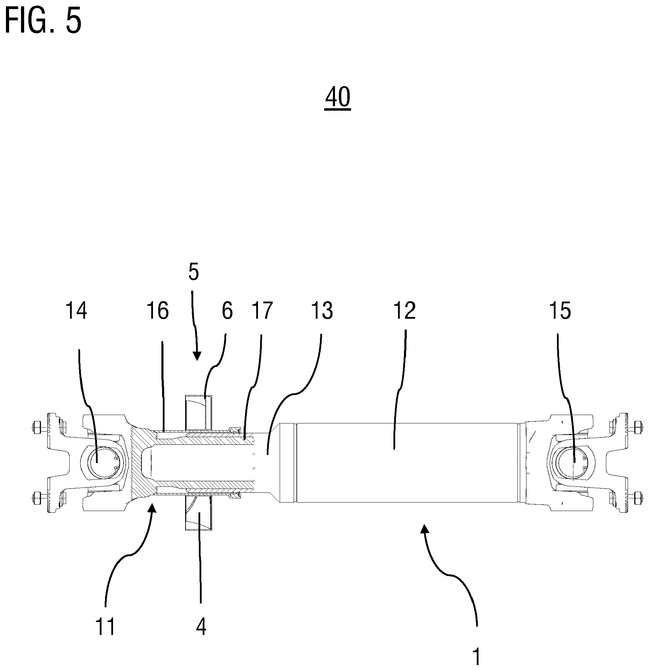

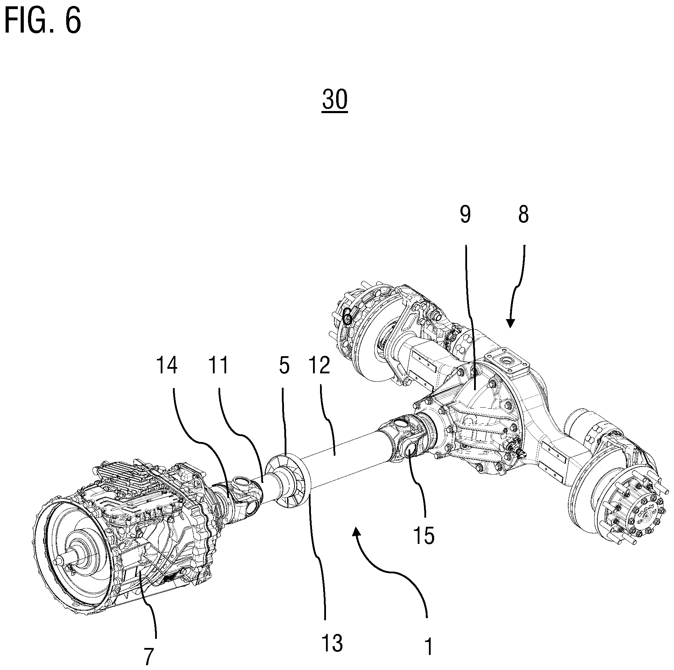

Mit dem Bezugszeichen 1 ist den Figuren 1 bis 6 eine an sich bekannte Antriebswelle eines Nutzfahrzeugs bezeichnet. Die Antriebswelle 1 dient der Kraftübertragung vom Getriebe 7 auf eine Achse 8 (vgl. Figur 6) des Kraftfahrzeugs. Die als Gelenk-Kardanwelle ausgeführte Antriebswelle 1 weist einen achsseitig angeordneten ersten Abschnitt 12 mit einem ersten Durchmesser auf, der mit einem Gelenk 15 an einem Differentialgehäuse 9 einer angetriebenen Achse 8 befestigt ist. Die Antriebswelle 1 weist ferner einen getriebeseitig angeordneten zweiten Abschnitt 11 mit einem zweiten Durchmesser auf, der mit einem Gelenk 14 am Getriebe 7 befestigt ist. Der zweite Durchmesser ist kleiner als der erste Durchmesser, wobei zwischen dem ersten Abschnitt und dem zweiten Abschnitt ein Übergangsabschnitt 13 angeordnet ist, in welchem der Durchmesser von dem größeren ersten Durchmesser auf den kleineren zweiten Durchmesser abnimmt, was gut in der Seitenansicht der Figur 5 erkennbar ist. Vorstehend wurde bereits erwähnt, dass auch eine Ausführungsvariante (nicht dargestellt) möglich ist, bei dem der zweite Durchmesser größer als der erste Durchmesser ist. Die Kardan-Gelenkwelle ist rohrförmig ausgeführt, was in Figur 5 für den zweiten Abschnitt 11 durch die Teilschnittansicht erkennbar ist. Auf der Keilwelle/Nabe 17 des zweiten Abschnitts 11 ist drehfest eine Abdeckung 16 angeordnet. Der gezeigte Aufbau mit den beiden Abschnitten 11, 12 bildet einen Längenausgleich aus zum Ausgleich von einfederungsbedingten Abstandsänderungen der Wellengelenkte 15, 14.

Eine Besonderheit der in Figur 1 gezeigten Ausführungsvariante 10 der Kühlvorrichtung ist, dass ein Lüfter 2 auf dem achsseitigen Teil der Gelenkwelle 1, d. h. auf dem ersten Abschnitt 12, angeordnet ist.

Das Lüfterrad 2 umfasst eine Nabe 3 zur koaxialen Anordnung des Lüfterrads 2 auf der Antriebswelle 1 und von der Nabe 3 ausgehende Lüfterblätter 4. Die Lüfterblätter 4 des Lüfterrades 2 sind in der in Figur 1 gezeigten Ausführungsvariante an ihrer äußeren Spitze, d. h. an ihrem radialen Ende, frei, d. h. nicht von einem geschlossenen Ring eingefasst.

Die Nabe 3 ist drehfest auf der Antriebswelle 1 befestigt, z. B. durch Aufschrauben, Vernieten, Verkleben, Anschweißen, Aufschweißen, Pressverband oder durch Aufklemmen, z. B. mittels einer Schlauchschelle.

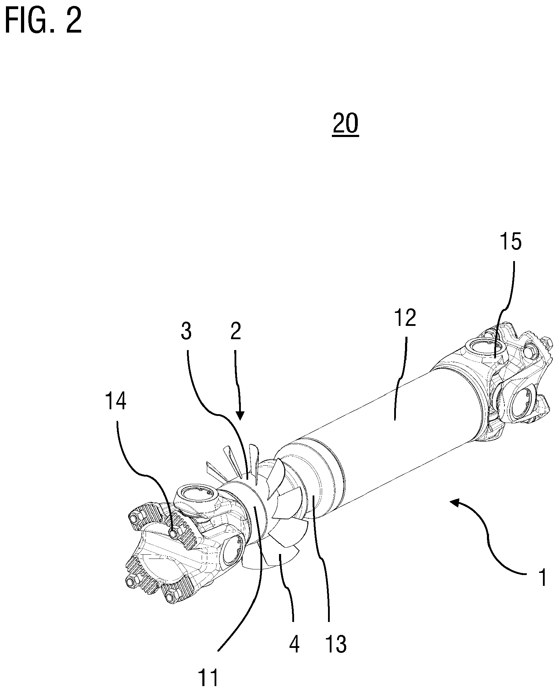

Das Lüfterrad 2 kann jedoch auch auf dem getriebeseitigen Teil der Gelenkwelle 1, d. h. auf dem zweiten Abschnitt 11, angeordnet sein, was durch die Ausführungsvariante 20 der Figur 2 illustriert ist. Hier ist das Lüfterrad 2 auf der Abdeckung 16 befestigt, was analog in Figur 5 dargestellt ist.

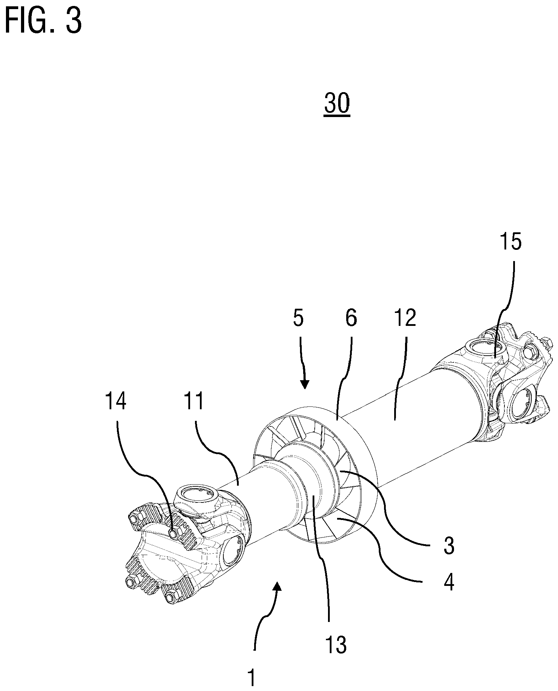

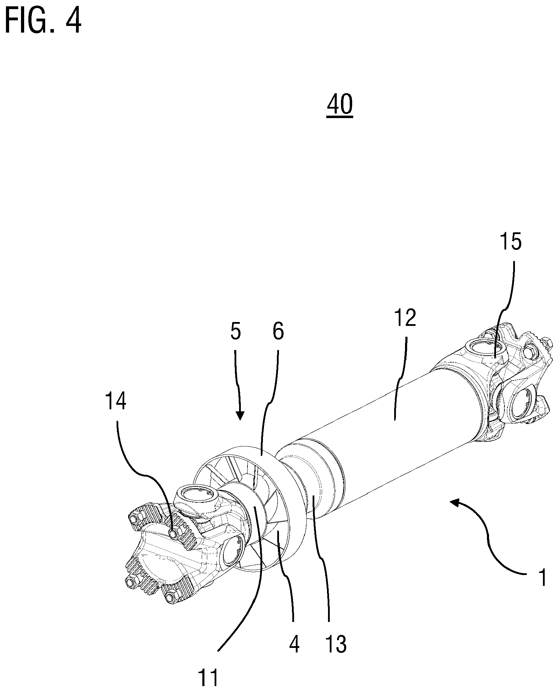

Das Lüfterrad 5 kann jedoch auch als Mantellüfter ausgeführt sein, bei dem die Lüfterblätter 4 an ihrem radialen Ende von einem geschlossenen Ring 6 eingefasst sind. Dies ist durch die Ausführungsvariante 30 der Figur 3 und durch die Ausführungsvariante 40 der Figur 4 illustriert.

Obwohl die Erfindung unter Bezugnahme auf bestimmte Ausführungsbeispiele beschrieben worden ist, ist es für einen Fachmann ersichtlich, dass verschiedene Änderungen ausgeführt werden können und Äquivalente als Ersatz verwendet werden können, ohne den Bereich der Erfindung zu verlassen. Zusätzlich können viele Modifikationen ausgeführt werden, ohne den zugehörigen Bereich zu verlassen. Folglich soll die Erfindung nicht auf die offenbarten Ausführungsbeispiele begrenzt sein, sondern soll alle Ausführungsbeispiele umfassen, die in den Bereich der beigefügten Patentansprüche fallen. Insbesondere beansprucht die Erfindung auch Schutz für den Gegenstand und die Merkmale der Unteransprüche unabhängig von den in Bezug genommenen Ansprüchen.

### Bezugszeichenliste

- 1: Antriebswelle
- 2: Lüfterrad
- 3: Nabe
- 4: Lüfterblatt
- 5: Lüfterrad
- 6: Geschlossener Ring
- 7: Getriebe
- 8: Achse
- 9: Differentialgehäuse
- 10: Kühlvorrichtung
- 11: Zweiter Abschnitt
- 12: Erster Abschnitt
- 13: Übergangsabschnitt
- 14: Getriebeseitiges Gelenk
- 15: Achsseitiges Gelenk
- 16: Abdeckung
- 17: Keilwelle/Nabe
- 20: Kühlvorrichtung
- 30: Kühlvorrichtung
- 40: Kühlvorrichtung

## Patentansprüche

1. Kühlvorrichtung (10; 20; 30; 40) für ein Kraftfahrzeug, insbesondere für ein Nutzfahrzeug, umfassend ein Lüfterrad (2; 5), das koaxial zu einer Antriebswelle (1) des Kraftfahrzeugs angeordnet ist und in Antriebsverbindung mit der Antriebswelle (1) steht.

2. Kühlvorrichtung nach Anspruch 1, **dadurch gekennzeichnet, dass** das Lüfterrad (2; 5) und die Antriebswelle (1) in ihrer Drehzahl gekoppelt sind.

3. Kühlvorrichtung nach Anspruch 1, **dadurch gekennzeichnet, dass** das Lüfterrad über eine Visco-Kupplung in Antriebsverbindung mit der Antriebswelle steht.

4. Kühlvorrichtung nach Anspruch 1, **dadurch gekennzeichnet, dass** das Lüfterrad über eine Fliehkraft-Kupplung in Antriebsverbindung mit der Antriebswelle steht.

5. Kühlvorrichtung nach einem der vorhergehenden Ansprüche, **dadurch gekennzeichnet, dass** das Lüfterrad mehrteilig ausgeführt ist, aufweisend mindestens zwei Teillüfterräder, die jeweils eine Teilnabe aufweisen.

6. Kühlvorrichtung (10; 20; 30; 40) nach einem der vorhergehenden Ansprüche, **dadurch gekennzeichnet, dass** die Antriebswelle (1) zur Kraftübertragung vom Getriebe auf eine Achse des Kraftfahrzeugs dient, rohrförmig ist und einen achsseitig angeordneten ersten Abschnitt (12) mit einem ersten Durchmesser und einen getriebeseitig angeordneten zweiten Abschnitt (11) mit einem zweiten Durchmesser aufweist, wobei der zweite Durchmesser kleiner oder größer als der erste Durchmesser ist, wobei zwischen dem ersten Abschnitt und dem zweiten Abschnitt ein Übergangsabschnitt (13) angeordnet ist, in welchem der Durchmesser von dem größeren ersten Durchmesser auf den kleineren zweiten Durchmesser abnimmt oder zunimmt.

7. Kühlvorrichtung (10; 30) nach Anspruch 6, **dadurch gekennzeichnet, dass** das Lüfterrad (2; 5) an dem achsseitig angeordneten ersten Abschnitt (12) angeordnet ist.

8. Kühlvorrichtung (20; 40) nach Anspruch 6, **dadurch gekennzeichnet, dass** das Lüfterrad (2; 5) an dem getriebeseitig angeordneten zweiten Abschnitt (11) angeordnet ist.

9. Kühlvorrichtung nach Anspruch 6, **dadurch gekennzeichnet, dass** das Lüfterrad (2; 5) an dem Übergangsabschnitt (13) angeordnet ist.

10. Kühlvorrichtung nach einem der vorhergehenden Ansprüche, **dadurch gekennzeichnet, dass** die Lüfterblätter (4) des Lüfterrades (5) an ihrem radialen Ende von einem geschlossenen Ring (6) eingefasst sind.

11. Kühlvorrichtung nach einem der Ansprüche 1 bis 9, **dadurch gekennzeichnet, dass** die Lüfterblätter (4) des Lüfterrades (2) an ihrem radialen Ende frei sind.

12. Kraftfahrzeug, insbesondere Nutzfahrzeug, aufweisend eine Kühlvorrichtung (10; 20; 30; 40) nach einem der vorhergehenden Ansprüche.
